# EUROPEAN PATENT APPLICATION

(11) **EP 4 576 712 A1**
(43) Date of publication of application: **25.06.2025**
(21) Application number: 24214321.2
(22) Date of filing: 20.11.2024
(51) Int. Cl.: H04L 43/0852, H04W 24/02, H04W 72/543

(54) **RESOURCE ALLOCATION FOR USER EQUIPMENT PAIRED PROCESSING**

(30) Priority: 20.12.2023 US 202318390464
(71) Applicant: INTEL Corporation, Santa Clara, CA 95054 (US)
(72) Inventor: MITTY, Harish, 560097 Bangalore (IN); KAPILA, Smit, 560102 Bangalore (IN); SINGH, Balvinder Pal, 490020 Bhilai (IN); MASTI, Sandeep, 560103 Bengaluru (IN); THAKUR, Jayprakash, 560035 Bangalore (IN); BANAVARA, Prasanna Ramarao, 560078 Bangalore KA (IN)
(74) Representative: 2SPL Patentanwälte PartG mbB

(57) **Abstract**

A network device for use in an Open Radio Access Network (O-RAN) base station or a network-side device for other radio access technology (RAT) includes communication circuitry. The communication circuitry can receive communications from a first user device for running a user application on a second user device. The network device can include processing circuitry coupled to the communication circuitry. The processing circuitry can determine a latency requirement for the user application. The processing circuitry can configure communication resources based on the latency requirement. The processing circuitry can configure communication of user application data based on the latency requirement and using the configured communication resources.

## Description

### TECHNICAL FIELD

Aspects pertain to wireless communications. Some aspects relate to slice and other resource allocation for paired processing between user devices.

### BACKGROUND

Users sometimes wish to connect to another computer remotely. Remote desktop protocols and related technologies permit this connection and access. However, these technologies can be cumbersome. Furthermore, these technologies do not give the user the native feel of using the remote computer and inputs and operations can be limited.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network in which some aspects of the disclosure may be implemented.
FIG. 1B illustrates a non-roaming 5G system architecture in accordance with some aspects.
FIG. 2 illustrates an example of an Open RAN (O-RAN) system architecture in which some aspects of the disclosure may be implemented.
FIG. 3 illustrates a logical architecture of the O-RAN system of FIG. 2, in accordance with some aspects.
FIG. 4 illustrates a system in which example aspects can be implemented.
FIG. 5 is a flow diagram illustrating method for communicating application data from a first user device to a second user device, in accordance with some aspects.
FIG. 6 illustrates a block diagram of a communication device such as an evolved Node-B (eNB), a new generation Node-B (gNB) (or another RAN node), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in or substituted for, those of other aspects. Aspects outlined in the claims encompass all available equivalents of those claims.

### Systems and networks

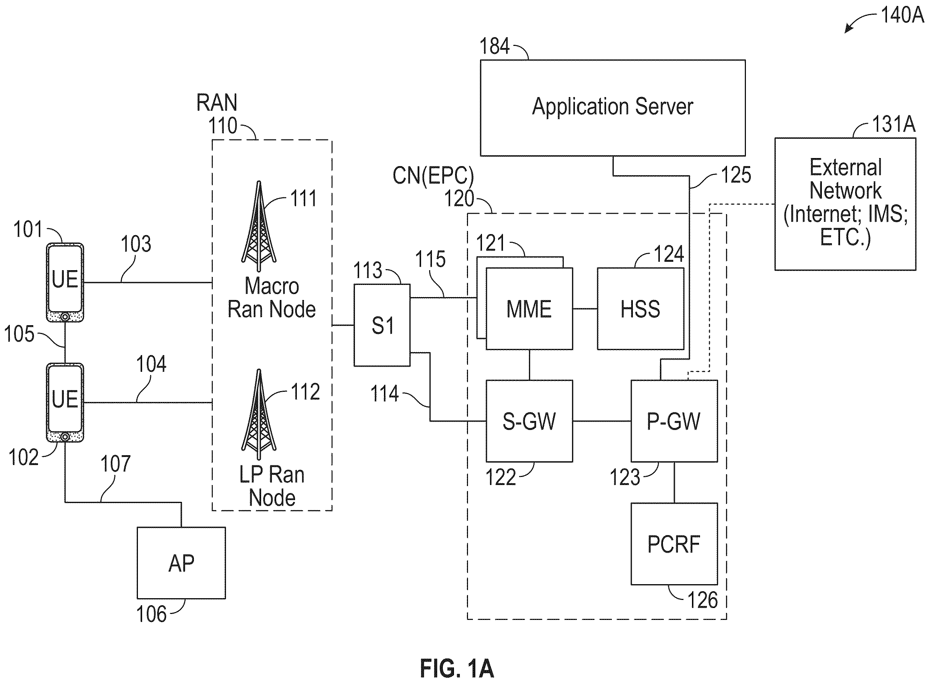

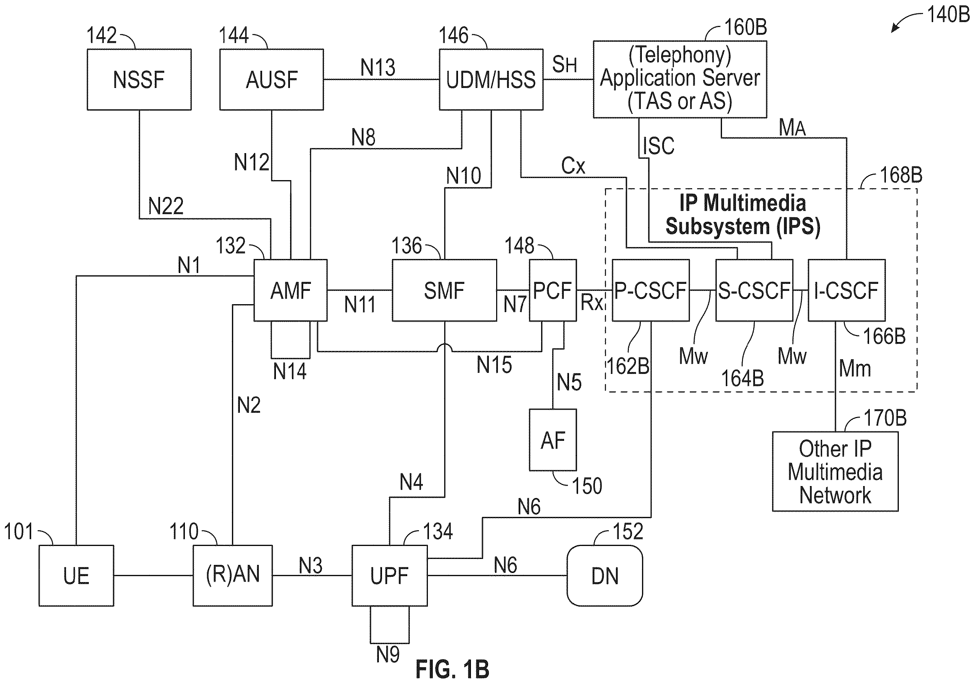

FIG. 1A illustrates an architecture of a network in which some aspects of the disclosure may be implemented. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein. Any of the radio links described herein (e.g., as used in the network 140A or any other illustrated network) may operate according to any exemplary radio communication technology and/or standard. FIG. 1B illustrates a non-roaming 5G system architecture in accordance with some aspects and is described in more detail later herein.

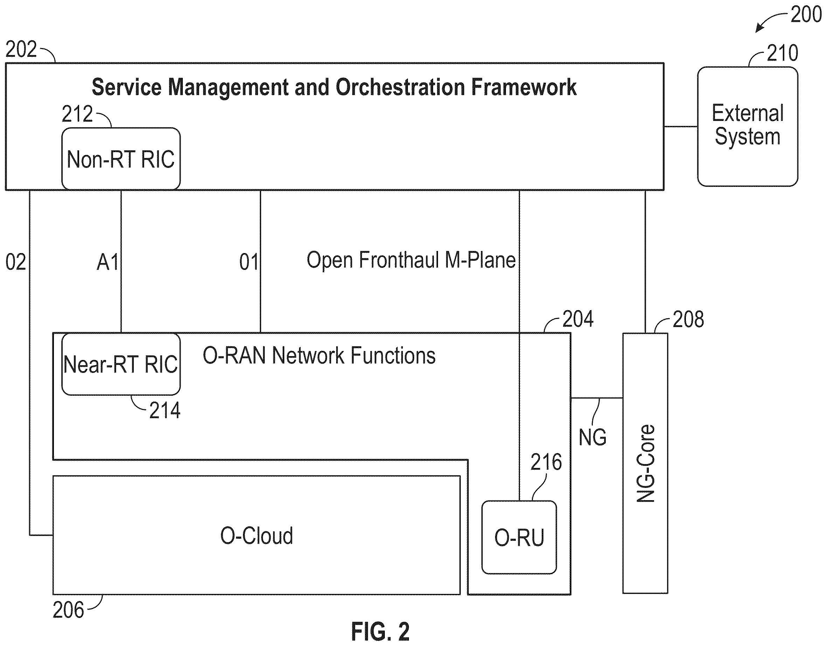

Referring now to FIG. 2, FIG. 2 provides a high-level view of an Open RAN (O-RAN) architecture 200, which can also be referred to as virtualized RAN (V-RAN). The O-RAN architecture 200 includes four O-RAN defined interfaces namely, the A1 interface, the O1 interface, the O2 interface, and the Open Fronthaul Management (M)-plane interface which connect the Service Management and Orchestration (SMO) framework 202 to O-RAN network functions (NFs) 204 and the O-Cloud 206. The SMO 202 also connects with an external system 210, which provides additional configuration data to the SMO 202. FIG. 2 also illustrates that the A1 interface connects the O-RAN Non-Real Time (RT) RAN Intelligent Controller (RIC) 212 in or at the SMO 202 and the O-RAN Near-RT RIC 214 in or at the O-RAN NFs 204. The O-RAN NFs 204 can be virtualized network functions (VNFs) such as virtual machines (VMs) or containers, sitting above the O-Cloud 206 and/or Physical Network Functions (PNFs) utilizing customized hardware. All O-RAN NFs 204 are expected to support the O1 interface when interfacing with the SMO framework 202. The O-RAN NFs 204 connect to the NG-Core 208 via the NG interface (which is a 3GPP-defined interface). The Open Fronthaul M-plane interface between the O-RAN Distributed Unit (DU) and the O-RAN Radio Unit (O-RU) 216 supports the O-RU 216 management in the O-RAN hybrid model. The O-RU's termination of the Open Fronthaul M-plane interface is an optional interface to the SMO 202 that is included for backward compatibility purposes and is intended for management of the O-RU 216 in hybrid mode only. The O-RU 216 termination of the O1 interface towards the SMO 202 is specified in ORAN standards.

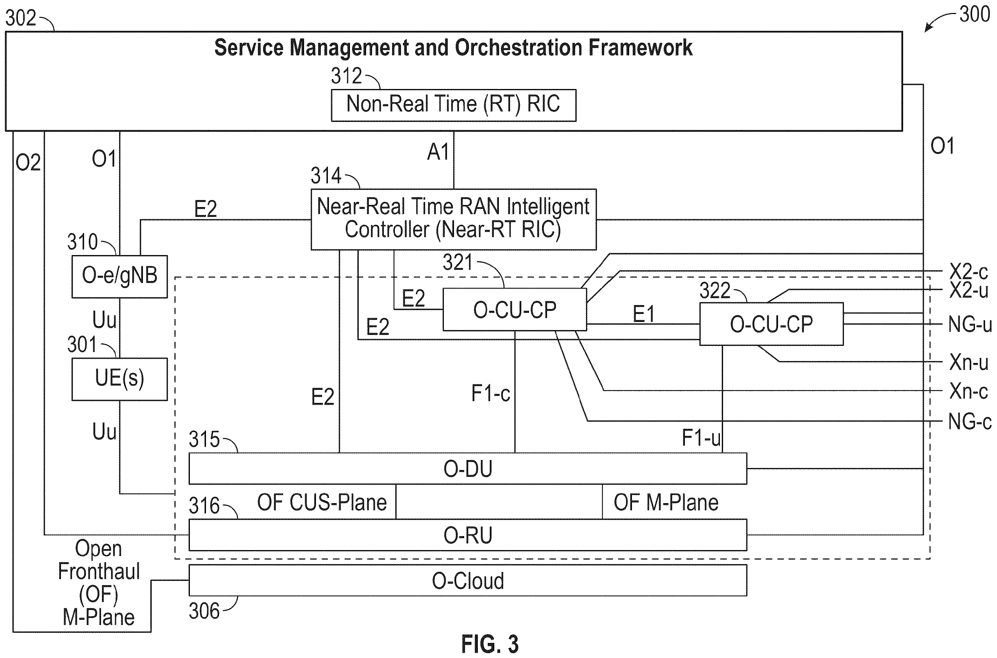

FIG. 3 shows an O-RAN logical architecture 300 corresponding to the O-RAN architecture 200 of FIG. 2. In FIG. 3, the SMO 302 corresponds to the SMO 202, O-Cloud 306 corresponds to the O-Cloud 206, the non-RT RIC 312 corresponds to the non-RT RIC 212, the near-RT RIC 314 corresponds to the near-RT RIC 214, and the O-RU 316 corresponds to the O-RU 216 of FIG. 2, respectively. The O-RAN logical architecture 300 includes a radio portion and a management portion.

The management portion/side of the architecture 300 includes the SMO Framework 302 containing the non-RT RIC 312 and may include the O-Cloud 306. The O-Cloud 306 is a cloud computing platform including a collection of physical infrastructure nodes to host the relevant O-RAN functions (e.g., the near-RT RIC 314, O-RAN Central Unit - Control Plane (O-CU-CP) 321, O-RAN Central Unit - User Plane (O-CU-UP) 322, and the O-RAN Distributed Unit (O-DU) 315), supporting software components (e.g., OSs, VMs, container runtime engines, ML engines, etc.), and appropriate management and orchestration functions.

The radio portion/side of the logical architecture 300 includes the near-RT RIC 314, the O-RAN Distributed Unit (O-DU) 315, the O-RU 316, the O-RAN Central Unit Control Plane (O-CU-CP) 321, and the O-RAN Central Unit - User Plane (O-CU-UP) 322 functions. The radio portion/side of the logical architecture 300 may also include the O-e/gNB 310.

The O-DU 315 is a logical node hosting RLC, MAC, and higher PHY layer entities/elements (High-PHY layers) based on a lower-layer functional split. The O-RU 316 is a logical node hosting lower PHY layer entities/elements (Low-PHY layer) (e.g., FFT/iFFT, PRACH extraction, etc.) and RF processing elements based on a lower layer functional split. The O-CU-CP 321 is a logical node hosting the RRC and the control plane (CP) part of the PDCP protocol. The O O-CU-UP 322 is a logical node hosting the user-plane part of the PDCP protocol and the SDAP protocol.

### Paired Processing

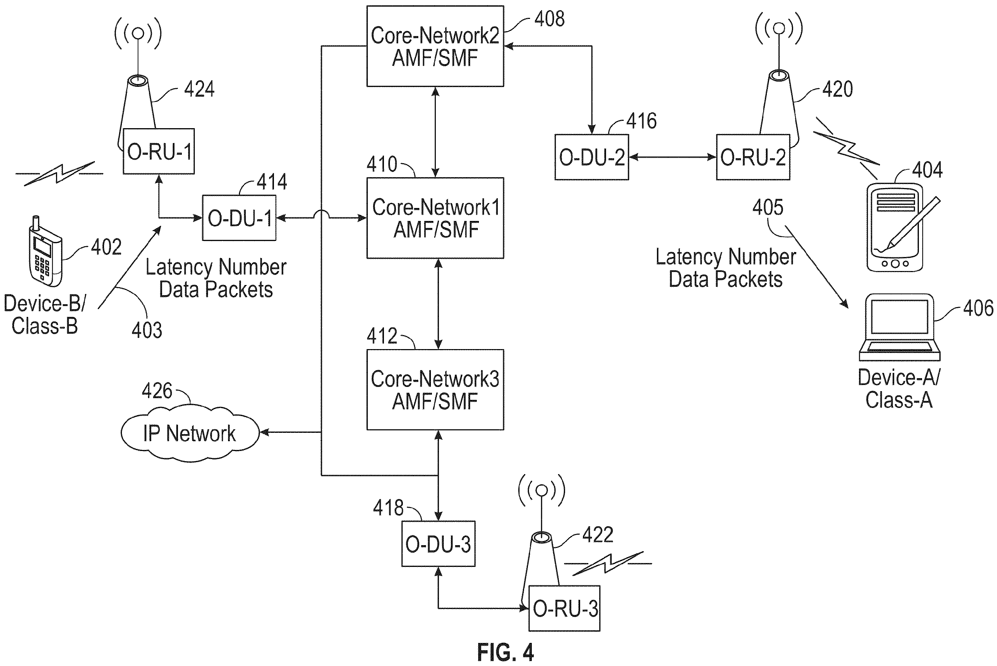

In any of the system architectures and networks described with respect to FIG. 1A-FIG. 3, users may wish to connect to another computer remotely. FIG. 4 illustrates an example network in which aspects of the disclosure can be implemented. FIG. 4 illustrates certain components of FIG. 1A-FIG. 3, with some components and some detail being omitted solely for purposes of clarity. It will be understood that while FIG. 4 illustrates implementation in an O-RAN environment, other radio access technologies (RATs) can be used.

As described earlier herein, users may wish to use an application (e.g., a gaming application or other processing-intensive application) on a low- or medium-end device 402 while leveraging the processing power of a different user device 404 or device 406. Device/s 404, 406 may be remote from device 402 (e.g., in a separate room or separate building from device 402, although aspects of the disclosure are not limited thereto). In examples, the device/s 404, 406 can have enhanced or improved processing power relative to device 402.

There are currently technologies available to for enabling the above interaction. For example, remote desktop protocols and related technologies permit connection and access from one device to another, but remote desktop technologies do not give the user the native feel of using the remote computer and inputs and operations can be limited. Aspects of the disclosure address these and other concerns by providing a low-end or medium-end device (e.g., device 402) methodologies to use processing capabilities of device/s 404, 406 in real-time.

Systems and methods according to aspects of the disclosure can improve stability and reduce the latency of communication between device 402 and device 404 or device 406. Data can be exchanged in real-time and with little or no lag or jitter. The device 402 can specify or request a latency for which communications should occur and the device 402 and device/s 404, 406 can negotiate a latency number for the communications to take place according to various aspects of the disclosure.

Packet processing can proceed according to negotiated latency requirements between device 402 and device 404. Device 402 can transmit packets to be processed by device/s 404, 406 at signal 403. The device 402 can uplink packets and O-DU 414 (e.g., at layer 2) can assign the packets an identifier or identification (e.g., unique latency number) and then provide these packets to O-DU 414 layer 1. O-DU 414 layer 1 can access the negotiated latency requirement and process the packets to match the negotiated latency requirement. The unique latency number can be a unique identifier to identify the source of the data packets (e.g., device 402 in the example illustrated).

Device 404 (or device 406, depending on which device is to be requested or used by device 402) can access downlink packets at O-DU 416 layer 1, access the unique latency number, match the unique latency number with the number provided on the uplink by device 402, and process the downlink packets 405 to match the negotiated latency requirement. O-DU 416 layer 2 can obtain packets from layer 1 and match the end-to-end latency requirement between device 402 and device 404. The device/s 404, 406 can then implement the desired device 402 application and return data or other user information.

O-DU 414 and O-DU 416 can provide resources (e.g., resource elements or other types of resources that can vary based on RAT) to maintain consistent uplink/downlink latency within the negotiated limits. As such, the O-DU 414, 416 can configure communication resources based on the latency requirement. Such configuration can include, as an example, carrier aggregation, although embodiments are not limited to carrier aggregation implementation or to any particular RAT.

Furthermore, a consistent stream of packets should be provided between device 402 and device/s 404, 406. Such consistency can be provided with resource allocation and also by layer 1 reserving a number of CPU cores for subsequent transmission interval packet processing at layer 1. If at any time a lag or unbalance is noticed (e.g., if latency increases) further resources can be allocated/adjusted. If further resources are not available (either to device 402 or to device 404, 406) or there is otherwise a mismatch between resources, then resources can be de-allocated from the other side (e.g., from either device 402 or device 404, 406) to maintain balance in resources.

The O-DU 414, 416 can implement synchronization of packets from device 402 and device 404, 406 so that they are processed within acceptable latency. Depending on the negotiated latency requirement appropriate O-DU 414, 416, layer 1 CPU resource slices can be allocated so that processing happens within an acceptable transmission time interval.

There can be a dependency or attachment between resources (e.g., over-the-air resources) and computing slices/computing resources of O-DU 414, 416 layer 1. In this regard, if for example sufficient over-the-air resource elements are available to maintain latency but slices are not available at O-DU 414, 416 layer 1, then resource elements can be de-allocated to match available slices. If sufficient slices are available at O-DU 414, 416 layer 1, but over-the-air resource elements are not available, then slices can be de-allocated to match available over-the-air resources. Furthermore, if future capacity can be predicted or detected, then O-DU 414, 416 can reserve CPU slices for a number of transmission time intervals or other time period.

Referring still to FIG. 4, core network elements 408, 410 and 412 can provide network functions such as access and mobility functions (AMF) and session management functions (SMF), which are described in further detail with respect to FIG. 1A and FIG. 1B. In V-RAN implementations, some functionality can be provided in software while some functionality such as forward error connection may remain in a hardware implementation. Furthermore in V-RAN implementations, some stack components (e.g., layer 1 (L1) or layer 2 (L2)) can be provided at the O-RAN Distributed Unit (O-DU) components 414, 416, 418 while core network elements 408, 410, 412 retain some other software capabilities (e.g., capabilities for other layers according to a 7.2x split). O-DU/s 414, 416, 418 and the 7.2x split are described in more detail with reference to FIG. 2 and FIG. 3.

The O-RAN Radio Unit (O-RU) 420, 422, 424 may have limited functionality including an antenna and circuitry for transmitting wireless signals converting signals from digital to analog, beamforming, etc. External IP network 426 can be provided and similar to external network 131A described with reference to FIG. 1A. While implementations are described with respect to O-RAN and O-DUs, aspects of the disclosure can be implemented using other RATs as long as there is a network-side device for allocating resources and controlling communication between device 402 and device/s 404, 406.

Procedures, operations, and apparatuses described herein allow implementation of an algorithm on a protocol's physical layer (e.g., Layer 1) to provide low latency processing at a network-side device (e.g., O-DU). Messaging can occur using, for example, with L1-L2 application programming interface (API) from the O-DU to O-CU, wherein details regarding O-DU and O-CU are provided with reference to FIG. 3.

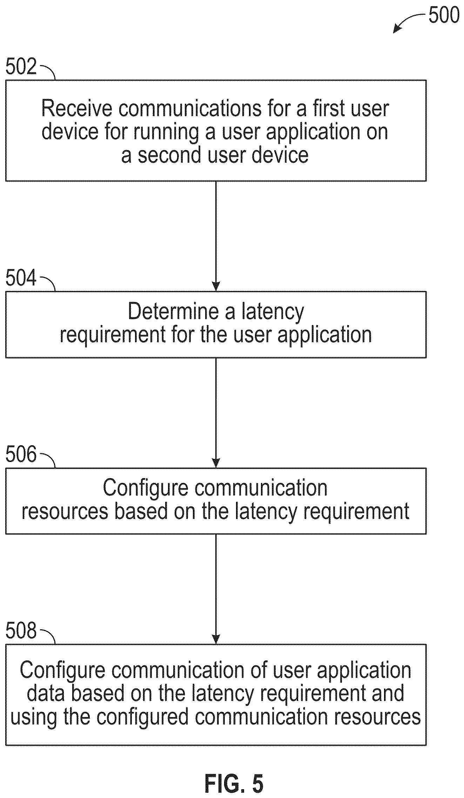

FIG. 5 is a flow diagram illustrating method 500 for communicating application data from a first user device to a second user device, in accordance with some aspects. Method 500 can be performed by processing circuitry of a base station (e.g., communication device 600 may be a base station or other network-side device, and method 500 or any other functionality disclosed herein can be performed by processor 602).

The method 500 can begin with operation 502 with receiving communications from a first user device 402 (FIG. 1) for running a user application on a second user device 404. The first user device 402 can be relatively low-end or with limited processing power, and the first user device 402 may wish to leverage processing power of the second user device 404.

The method 500 can continue with operation 504 with determining a latency requirement for the user application. The latency requirement can be provided within a parameter or request of the first user device 402 and/or negotiated between the first user device 402 and the second user device 404.

The method 500 can continue with operation 506 with configuring communication resources based on the latency requirement. The resources can include any over-the-air resources such as resource elements, cell carrier aggregation, etc. but aspects of the disclosure are not limited to any particular communication standard, RAT, or resource type.

The method 500 can continue with operation 508 with configuring communication of user application data based on the latency requirement and using the configured communication resources. At this point, a user can be executing an application on the first user device 402 while leveraging resources of the second user device 404.

### Other apparatuses and description of interfaces and communications

LTE and LTE-Advanced are standards for wireless communications of high-speed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

Referring again to FIG. 1A, the UEs 101 and 102 may be configured to connect, e.g., communicatively couple, with a radio access network (RAN) 110. The RAN 110 may be, for example, a Universal Mobile Telecommunications System (UMTS), an Evolved Universal Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable connections 103 and 104. These access nodes (ANs) can be referred to as base stations (BSs), NodeBs, evolved NodeBs (eNBs), Next Generation NodeBs (gNBs), RAN network nodes, and the like, and can comprise ground stations (e.g., terrestrial access points) or satellite stations providing coverage within a geographic area (e.g., a cell). In some aspects, communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112 or an unlicensed spectrum based secondary RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management, and data packet scheduling, and mobility management. In an example, any of the nodes 111 and/or 112 can be a new generation Node-B (gNB), an evolved node-B (eNB), or another type of RAN node.

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIG. 1B). In this aspect, the S1 interface 113 is split into two parts: the S1-U interface 114, which carries user traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, the capacity of the equipment, the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and route data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, a RAN network node, and so forth. In some aspects, a gNB can be a master node (MN) and NG-eNB can be a secondary node (SN) in a 5G architecture. In some aspects, the master/primary node may operate in a licensed band and the secondary node may operate in an unlicensed band.

FIG. 1B illustrates a non-roaming 5G system architecture in accordance with some aspects. Referring to FIG. 1B, there is illustrated a 5G system architecture 140B in a reference point representation. More specifically, UE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170B, e.g. an IMS operated by a different network operator.

In some aspects, the UDM/HSS 146 can be coupled to an application server 160B, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1B can also be used.

Referring again to FIG. 3, an E2 interface terminates at a plurality of E2 nodes. The E2 nodes are logical nodes/entities that terminate the E2 interface. For NR/5G access, the E2 nodes include the O-CU-CP 321, O-CU-UP 322, O-DU 315, or any combination of elements. For E-UTRA access the E2 nodes include the O-e/gNB 310. As shown in FIG. 3, the E2 interface also connects the O-e/gNB 310 to the Near-RT RIC 314. The protocols over the E2 interface are based exclusively on Control Plane (CP) protocols. The E2 functions are grouped into the following categories: (a) near-RT RIC 314 services (REPORT, INSERT, CONTROL, and POLICY, as described in O-RAN standards); and (b) near-RT RIC 314 support functions, which include E2 Interface Management (E2 Setup, E2 Reset, Reporting of General Error Situations, etc.) and Near-RT RIC Service Update (e.g., capability exchange related to the list of E2 Node functions exposed over E2).

FIG. 3 shows the Uu interface between UE 301 and O-e/gNB 310 as well as between the UE 301 and O-RAN components. The Uu interface is a 3GPP-defined interface, which includes a complete protocol stack from L1 to L3 and terminates in the NG-RAN or E-UTRAN. The O-e/gNB 310 is an LTE eNB, a 5G gNB, or ng-eNB that supports the E2 interface. The O-e/gNB 310 may be the same or similar to other RAN nodes discussed previously. The UE 301 may correspond to UEs discussed previously and/or the like. There may be multiple UEs 301 and/or multiple O-e/gNB 310, each of which may be connected to one another via respective Uu interfaces. Although not shown in FIG. 3, the O-e/gNB 310 supports O-DU 315 and O-RU 316 functions with an Open Fronthaul interface between them.

The Open Fronthaul (OF) interface(s) is/are between O-DU 315 and O-RU 316 functions. The OF interface(s) includes the Control User Synchronization (CUS) Plane and Management (M) Plane. FIG. 2 and FIG. 3 also show that the O-RU 316 terminates the OF M-Plane interface towards the O-DU 315 and optionally towards the SMO 302. The O-RU 316 terminates the OF CUS-Plane interface towards the O-DU 315 and the SMO 302.

The F1-c interface connects the O-CU-CP 321 with the O-DU 315. As defined by 3GPP, the F1-c interface is between the gNB-CU-CP and gNB-DU nodes. However, for purposes of O-RAN, the F1-c interface is adopted between the O-CU-CP 321 with the O-DU 315 functions while reusing the principles and protocol stack defined by 3GPP and the definition of interoperability profile specifications.

The F1-u interface connects the O-CU-UP 322 with the O-DU 315. As defined by 3GPP, the F1-u interface is between the gNB-CU-UP and gNB-DU nodes. However, for purposes of O-RAN, the F1-u interface is adopted between the O-CU-UP 322 with the O-DU 315 functions while reusing the principles and protocol stack defined by 3GPP and the definition of interoperability profile specifications.

The NG-c interface is defined by 3GPP as an interface between the gNB-CU-CP and the AMF in the 5GC. The NG-c is also referred to as the N2 interface (see [006]). The NG-u interface is defined by 3GPP, as an interface between the gNB-CU-UP and the UPF in the 5GC. The NG-u interface is referred to as the N3 interface. In O-RAN, NG-c and NG-u protocol stacks defined by 3GPP are reused and may be adapted for O-RAN purposes.

The X2-c interface is defined in 3GPP for transmitting control plane information between eNBs or between eNB and en-gNB in EN-DC. The X2-u interface is defined in 3GPP for transmitting user plane information between eNBs or between eNB and en-gNB in EN-DC. In O-RAN, X2-c and X2-u protocol stacks defined by 3GPP are reused and may be adapted for O-RAN purposes.

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB. In O-RAN, Xn-c and Xn-u protocol stacks defined by 3GPP are reused and may be adapted for O-RAN purposes.

The E1 interface is defined by 3GPP as being an interface between the gNB-CU-CP (e.g., gNB-CU-CP 3728) and gNB-CU-UP (see e.g., [007], [009]). In O-RAN, E1 protocol stacks defined by 3GPP are reused and adapted as an interface between the O-CU-CP 621 and the O-CU-UP 622 functions.

The O-RAN Non-Real Time (RT) RAN Intelligent Controller (RIC) 312 is a logical function within the SMO framework 202, 302 that enables non-real-time control and optimization of RAN elements and resources; AI/machine learning (ML) workflow(s) including model training, inferences, and updates; and policy-based guidance of applications/features in the Near-RT RIC 314.

In some embodiments, the non-RT RIC 312 is a function that sits within the SMO platform (or SMO framework) 302 in the O-RAN architecture. The primary goal of non-RT RIC is to support intelligent radio resource management for a non-real-time interval (i.e., greater than 500 ms), policy optimization in RAN, and insertion of AI/ML models to near-RT RIC and other RAN functions. The non-RT RIC terminates the A1 interface to the near-RT RIC. It will also collect OAM data over the O1 interface from the O-RAN nodes.

The O-RAN near-RT RIC 314 is a logical function that enables near-real-time control and optimization of RAN elements and resources via fine-grained data collection and actions over the E2 interface. The near-RT RIC 314 may include one or more AI/MI, workflows including model training, inferences, and updates.

The non-RT RIC 312 can be an ML training host to host the training of one or more ML models. ML training can be performed offline using data collected from the RIC, O-DU 315, and O-RU 316. For supervised learning, non-RT RIC 312 is part of the SMO 302, and the ML training host and/or ML model host/actor can be part of the non-RT RIC 312 and/or the near-RT RIC 314. For unsupervised learning, the ML training host and ML model host/actor can be part of the non-RT RIC 312 and/or the near-RT RIC 314. For reinforcement learning, the ML training host and ML model host/actor may be co-located as part of the non-RT RIC 312 and/or the near-RT RIC 314. In some implementations, the non-RT RIC 312 may request or trigger ML model training in the training hosts regardless of where the model is deployed and executed. ML models may be trained and not currently deployed.

The A1 interface is between the non-RT RIC 312 (within or outside the SMO 302) and the near-RT RIC 314. The A1 interface supports three types of services, including a Policy Management Service, an Enrichment Information Service, and an ML Model Management Service.

In some embodiments, an O-RAN network node can include a disaggregated node with at least one O-RAN Radio Unit (O-RU), at least one O-DU coupled via an F1 interface to at least one O-CU coupled via an E2 interface to a RIC (e.g., RIC 312 and/or RIC 314).

As illustrated in FIG. 2 and FIG. 3, key interfaces in O-RAN (e.g., defined and maintained by O-RAN) include the following interfaces: A1, O1, O2, E2, Open Fronthaul M-Plane, and O-Cloud. O-RAN network functions (NFs) can be VNFs, VMs, Containers, and PNFs. Interfaces defined and maintained by 3GPP which are part of the O-RAN architecture include the following interfaces: E1, F1, NG-C, NG-U, X2, Xn, and Uu interfaces.

As illustrated in FIG. 2 and FIG. 3, the following O-RAN control loops may be configured:
(a) Loop-1: (O-DU Scheduler control loop) TTI msec level scheduling;
(b) Loop-2: (Near-RT RIC) 10-500 msec resource optimization; and
(c) Loop-3: (Non-RT RIC) Greater than 500 msec, Policies, Orchestration, and SON.

As illustrated in FIG. 2 and FIG. 3, the following O-RAN nodes may be configured:
(a) O-CU-CP: RRC and PDCP-C NFs (associated with Loop-2);
(b) O-CU-UP: SDAP and PDCP-U NFs (associated with Loop-2);
(c) O-DU: RLC, MAC, and PHY-U NFs (associated with Loop-1); and
(d) O-RU: PHY-L and RF (associated with Loop 1).

As illustrated in FIG. 2 and FIG. 3, the following O-RAN RIC components may be configured:
(a) Non-RT-RIC: Loop 3 RRM services (O1 and A1 interfaces); and
(b) Near-RT-RIC: Loop 2 RRM services (E2 interface).

As illustrated in FIG. 2 and FIG. 3, the following O-RAN interfaces may be configured:
(a) A1 interface is between Non-RT-RIC and the Near-RT RIC functions; A1 is associated with policy guidance for control-plane and user-plane functions; Impacted O-RAN elements associated with A1 include O-RAN nodes, UE groups, and UEs;
(b) O1 interface is between O-RAN Managed Element and the management entity; O1 is associated with Management-plane functions, Configuration, and threshold settings mostly OAM & FCAPS functionality to O-RAN network functions; Impacted O-RAN elements associated with O1 include mostly O-RAN nodes and UE groups (identified e.g. by S-NSSAI and slice ID), sometimes individual UEs (pending solution for UE identifiers);
(c) O2 interface is between the SMO and Infrastructure Management Framework; O2 is associated with the management of Cloud infrastructure and Cloud resources allocated to O-RAN, FCAPS for O-Cloud; Impacted O-RAN elements associated with O2 include O-Cloud, UE groups, and UEs;
(d) E2 interface is between Near-RT RIC and E2 node; E2 is associated with control-plane and user-plane control functions; Impacted O-RAN elements associated with E2 include mostly individual UEs, sometimes UE groups and E2 nodes;
(e) E2-cp is between Near-RT RIC and O-CU-CP functions. E2-up is between Near-RT RIC and O-CU-UP functions;
(f) E2-du is between Near-RT RIC and O-DU functions. E2-en is between Near-RT RIC and O-eNB functions; and
(g) Open Fronthaul Interface is between O-DU and O-RU functions; this interface is associated with CUS (Control User Synchronization) Plane and Management Plane functions and FCAPS to O-RU; Impacted O-RAN elements associated with the Open Fronthaul Interface include O-DU and O-RU functions.

As illustrated in FIG. 1A-FIG. 3, the following 3GPP interfaces may be configured:
(a) E1 interface between the gNB-CU-CP and gNB-CU-UP logical nodes. In O-RAN, it is adopted between the O-CU-CP and the O-CU-UP.
(b) F1 interface between the gNB-CU and gNB-DU logical nodes. In O-RAN, it is adopted between the O-CU and the O-DU. F1-c is between O-CU-CP and O-DU functions. F1-u is between O-CU-UP and O-DU functions.
(c) The NG-U interface is between the gNB-CU-UP and the UPF in the 5GC and is also referred to as N3. In O-RAN, it is adopted between the O-CU-UP and the 5GC.
(d) The X2 interface connects eNBs or connects eNB and en-gNB in EN-DC. In O-RAN, it is adopted for the definition of interoperability profile specifications. X2-c is for the control plane. X2-u for a user plane.
(e) The Xn interface connects gNBs, and ng-eNBs, or connects ng-eNB and gNB. In O-RAN, it is adopted for the definition of interoperability profile specifications. Xn-c is for the control plane. Xn-u is for the user plane.
(f) The UE to e/gNB interface is the Uu interface and is a complete protocol stack from L1 to L3 and terminates in the NG-RAN. Since the Uu messages still flow from the UE to the intended e/gNB managed function, it is not shown in the O-RAN architecture as a separate interface to a specific managed function.

In example embodiments, any of the UEs or RAN network nodes discussed in connection with FIG. 1A-FIG. 3 can be configured to operate using the techniques discussed herein associated with multi-access traffic management in an O-RAN architecture.

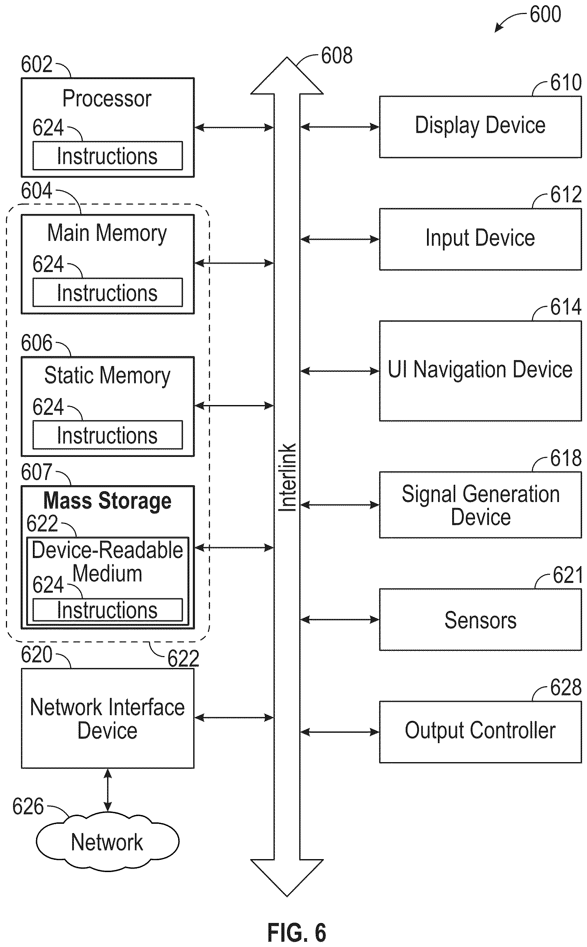

FIG. 6 illustrates a block diagram of a communication device such as an evolved Node-B (eNB), a new generation Node-B (gNB) (or another RAN node), an access point (AP), a wireless station (STA), a mobile station (MS), or a user equipment (UE), in accordance with some aspects and to perform one or more of the techniques disclosed herein. In alternative aspects, the communication device 600 may operate as a standalone device or may be connected (e.g., networked) to other communication devices.

The communication device may include a hardware processor 602 (e.g., a central processing unit (CPU), a graphics processing unit (GPU), a hardware processor core, or any combination thereof), a main memory 604, a static memory 606, and mass storage 607 (e.g., hard drive, tape drive, flash storage, or other block or storage devices), some or all of which may communicate with each other via an interlink (e.g., bus) 608.

The communication device 600 may further include a display device 610, an alphanumeric input device 612 (e.g., a keyboard), and a user interface (UI) navigation device 614 (e.g., a mouse). In an example, the display device 60, input device 612, and UI navigation device 614 may be a touchscreen display. The communication device 600 may additionally include a signal generation device 618 (e.g., a speaker), a network interface device 620, and one or more sensors 621, such as a global positioning system (GPS) sensor, compass, accelerometer, or another sensor. The communication device 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The mass storage 607 may include a communication device-readable medium 622, on which is stored one or more sets of data structures or instructions 624 (e.g., software) embodying or utilized by any one or more of the techniques or functions described herein. In some aspects, registers of the processor 602, the main memory 604, the static memory 606, and/or the mass storage 607 may be, or include (completely or at least partially), the device-readable medium 622, on which is stored the one or more sets of data structures or instructions 624, embodying or utilized by any one or more of the techniques or functions described herein. In an example, one or any combination of the hardware processor 602, the main memory 604, the static memory 606, or the mass storage 607 may constitute the device-readable medium 622.

As used herein, the term "device-readable medium" is interchangeable with "computer-readable medium" or "machine-readable medium." While the communication device-readable medium 622 is illustrated as a single medium, the term "communication device-readable medium" may include a single medium or multiple media (e.g., a centralized or distributed database, and/or associated caches and servers) configured to store the one or more instructions 624. The term "communication device-readable medium" is inclusive of the terms "machine-readable medium" or "computer-readable medium", and may include any medium that is capable of storing, encoding, or carrying instructions (e.g., instructions 624) for execution by the communication device 600 and that causes the communication device 600 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

Instructions 624 may further be transmitted or received over a communications network 626 using a transmission medium via the network interface device 620 utilizing any one of several transfer protocols. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one single-input-multiple-output (SIMO), MIMO, or multiple-input-single-output (MISO) techniques. In some examples, the network interface device 620 may wirelessly communicate using Multiple User MIMO techniques.

The term "transmission medium" shall be taken to include any intangible medium that is capable of storing, encoding, or carrying instructions for execution by the communication device 600, and includes digital or analog communications signals or another intangible medium to facilitate communication of such software. In this regard, a transmission medium in the context of this disclosure is a device-readable medium.

Example aspects of the present disclosure are further disclosed hereinbelow.

Example 1 is a network device comprising: communication circuitry configured to receive communications from a first user device for running a user application on a second user device; and processing circuitry coupled to the communication circuitry configured to: determine a latency requirement for the user application; configure communication resources based on the latency requirement; and configure communication of user application data based on the latency requirement and using the configured communication resources.

In Example 2, the subject matter of Example 1 can optionally include wherein the processing circuitry includes multiple processing slices and wherein the processing circuitry is further configured to allocate processing slices based on the latency requirement.

In Example 3, the subject matter of any of Examples 1-2 can optionally include wherein user application data includes identification information for the first user device.

In Example 4, the subject matter of Example 3 can optionally include wherein the identification information includes an indication of a latency requirement for the first user device or for the user application.

In Example 5, the subject matter of any of Examples 1-4 can optionally include wherein configuring communication resources includes performing carrier aggregation.

In Example 6, the subject matter of any of Examples 1-5 can optionally include wherein the processing circuitry is configured to reduce communication resources for either the first user device or the second user device if a mismatch is detected between communication resources of the first user device or the second user device.

In Example 7, the subject matter of any of Examples 1-6 can optionally include wherein the processing circuitry is configured to adjust communication resources upon detecting a change in resource allocation for either or both of the first user device or the second user device.

Example 8 is an apparatus for use in an Open Radio Access Network (O-RAN) base station, the apparatus comprising: processing circuitry, wherein to configure the O-RAN base station for signal processing in an O-RAN network, the processing circuitry is to: determine a latency requirement for a user application; configure communication resources based on the latency requirement; and configure communication of user application data based on the latency requirement and using the configured communication resources; and a memory coupled to the processing circuitry and configured to store latency information and identification information for user devices associated with the user application.

In Example 9, the subject matter of Example 8 can optionally include wherein the processing circuitry is to: allocate processing slices based on the latency requirement.

In Example 10, the subject matter of any of Examples 8-9 can optionally include wherein user application data includes identification information for a first user device.

In Example 11, the subject matter of Example 10 can optionally include wherein the identification information includes an indication of a latency requirement for the first user device or for the user application.

In Example 12, the subject matter of any of Examples 8-11 can optionally include wherein configuring communication resources includes performing carrier aggregation.

In Example 13, the subject matter of any of Examples 8-12 can optionally include wherein the processing circuitry is configured to reduce communication resources for either a first user device or a second user device if a mismatch is detected between communication resources of the first user device or the second user device.

In Example 14, the subject matter of any of Examples 8-13 can optionally include wherein the processing circuitry is configured to adjust communication resources upon detecting a change in resource allocation for either or both of a first user device or a second user device.

Example 15 is a method for communicating application data from a first user device to a second user device, the method comprising: receiving communications from a first user device for running a user application on a second user device; determining a latency requirement for the user application; configuring communication resources based on the latency requirement; and configuring communication of user application data based on the latency requirement and using the configured communication resources.

In Example 16, the subject matter of Example 15 can optionally include allocating processing slices based on the latency requirement.

In Example 17, the subject matter of any of Examples 15-16 can optionally include wherein user application data includes identification information for the first user device.

In Example 18, the subject matter of Example 17 can optionally include wherein the identification information includes an indication of a latency requirement for the first user device or for the user application.

In Example 19, the subject matter of any of Examples 15-18 can optionally include wherein configuring communication resources includes performing carrier aggregation.

In Example 20, the subject matter of any of Examples 15-19 can optionally include reducing communication resources for either the first user device or the second user device if a mismatch is detected between communication resources of the first user device or the second user device.

Example 21 is a system including means for performing any of Examples 1-20.

Although example aspects have been described herein, it will be evident that various modifications and changes may be made to these aspects without departing from the broader scope of the present disclosure. Accordingly, the specification and drawings are to be regarded in an illustrative rather than a restrictive sense. This Detailed Description, therefore, is not to be taken in a limiting sense, and the scope of various aspects is defined only by the appended claims, along with the full range of equivalents to which such claims are entitled.

## Claims

1. A network device comprising:
communication circuitry configured to receive communications from a first user device for running a user application on a second user device; and
processing circuitry coupled to the communication circuitry configured to:
determine a latency requirement for the user application;
configure communication resources based on the latency requirement; and
configure communication of user application data based on the latency requirement and using the configured communication resources.

2. The network device of claim 1, wherein the processing circuitry includes multiple processing slices and wherein the processing circuitry is further configured to allocate processing slices based on the latency requirement.

3. The network device of any of claims 1-2, wherein user application data includes identification information for the first user device.

4. The network device of claim 3, wherein the identification information includes an indication of a latency requirement for the first user device or for the user application.

5. An apparatus for use in an Open Radio Access Network (O-RAN) base station, the apparatus comprising:
processing circuitry, wherein to configure the O-RAN base station for signal processing in an O-RAN network, the processing circuitry is to:
determine a latency requirement for a user application;
configure communication resources based on the latency requirement; and
configure communication of user application data based on the latency requirement and using the configured communication resources; and
a memory coupled to the processing circuitry and configured to store latency information and
identification information for user devices associated with the user application.

6. The apparatus of claim 5, wherein the processing circuitry is to:
allocate processing slices based on the latency requirement.

7. The apparatus of any of claims 5-6, wherein user application data includes identification information for a first user device.

8. The apparatus of claim 7 wherein the identification information includes an indication of a latency requirement for the first user device or for the user application.

9. The apparatus of any of claims 5-8, wherein configuring communication resources includes performing carrier aggregation.

10. The apparatus of any of claims 5 9, wherein the processing circuitry is configured to reduce communication resources for either a first user device or a second user device if a mismatch is detected between communication resources of the first user device or the second user device.

11. A method for communicating application data from a first user device to a second user device, the method comprising:
receiving communications from a first user device for running a user application on a second user device;
determining a latency requirement for the user application;
configuring communication resources based on the latency requirement; and
configuring communication of user application data based on the latency requirement and
using the configured communication resources.

12. The method of claim 11, further comprising allocating processing slices based on the latency requirement.

13. The method of any of claims 11-12, wherein user application data includes identification information for the first user device.

14. Machine-readable storage including machine-readable instructions, when executed, cause a computer to implement the method as claimed in any preceding claim.

15. A computer program comprising instructions which, when the program is executed by a computer, cause the computer to carry out the method as claimed in any preceding claim.
